**Europäisches Patentamt**

**European Patent Office**

**Office européen des brevets**

(19)

(11) Publication number: **0 241 668**
**B1**

(12) # EUROPEAN PATENT SPECIFICATION

(45) Date of publication of the patent specification:
16.05.90

(51) Int. Cl.⁵: **C22B 21/00**

(21) Application number: 87102127.5

(22) Date of filing: 14.02.87

(54) **Process for recovering the scraps deriving from the machining of aluminum and its alloys,with production of extruded semifinished articles.**

(30) Priority: 19.03.86 IT 1981386

(43) Date of publication of application:
21.10.87 Bulletin 87/43

(45) Publication of the grant of the patent:
16.05.90 Bulletin 90/20

(84) Designated Contracting States:
AT BE CH DE ES FR GB GR LI LU NL SE

(56) References cited:
GB-A- 569 984
GB-A- 570 166
US-A- 2 302 980
US-A- 3 322 529
US-A- 3 650 830

DISPOSAL OF INDUSTRIAL WASTE MATERIALS,
CONFERENCE, Sheffield, April 1956, pages 67-74,
Society of Chemical Industry, London, GB; F.H. SMITH:
"The recovery of aluminium from waste products"

(73) Proprietor: ALUMINIA S.p.A., Piazza Marconi, 25,
I-00144 Roma-Eur(IT)

(72) Inventor: Atzori, Claudio, c/o ALUMINIA S.p.A.
Stabilimento di Portovesme, I-09010 Portoscuso CA(IT)

(74) Representative: Trupiano, Roberto et al, BREVETTI
EUROPA S.r.l. Piazza Bernini, 6, I-20133 Milano (MI)(IT)

## Description

The object of the present invention is a process for recovering the scaps deriving from the mechanical machining of aluminum and its alloys, such as trimmings, shavings, filings and the like, impregnated with oils, oils emulsified with water and/or other similar machining lubricants, with the production of extruded semifinished articles of aluminum and its alloys, having improved mechanical characteristics, with high recovery yields and low energy consumption.

The machining of formed pieces, or of semifinished articles of aluminum and aluminum alloys, to the purpose of obtaining various shaped products, such as any types of structures, as frames and casings for the building industry and the like, or to the purpose of obtaining cut-to-size intermediate and polished products to be submitted, e.g., to such plastic processing as lamination, moulding or extrusion, involves the production of such machining scraps as trimmings, shavings, filings, and the like, which are precisely formed by the mechanical steps of sawing, milling, turning, drilling and other similar steps. Such scraps result heavily impregnated by oil emulsified in water, or by other lubricant liquids customarily used during the above mentioned machining steps.

The recovery and re-use of such scraps is carried out, according to the known art, by smelting them again inside suitable furnaces. Before re-smelting, the scraps are usually washed with a detergent or with a solvent, they are subsequently dried and then compacted into cube, cylinder, and the like, shapes, so to enable them to be fed to the furnace and to reduce, as extensively as possible, the metal surface exposed to the oxidation.

But such a recovery process shows the drawback that the metal recovery yields are very poor, because of the high losses due to the oxidation of the same scraps during the heating step, until the smelting temperature is reached, and during the same smelting.

Once that the smelting has occurred, the oxides formed pass into the slags, and, together with these, they are removed and ultimately lost.

It is furthermore clear that, to be able to convert the scraps into a metal form which may be plastically processed, e.g., by extrusion, using is necessary, according to the known art, a considerable amount of energy, in particular for the drying, compacting, heating and smelting steps, as well a for the steps of casting and solidification of the obtained liquid metal, and of the subsequent extrusion of the shaped article.

According to GB-A 569 984, the aluminum scraps are freed from organic contamination (oil, etc) by a suitable method and are then subjected to a mechanical pretreatment, consisting in keeping the scraps in motion or precompressing them at $45 \times 10^3$ to $120 \times 10^3$ kPa at a temperature of 250–500°C, in order to loosen the oxide skins covering the particles; the scraps so pretreated are then extruded into final articles at a temperature of 350 to 450°C by means of an extrusion press provided with heating means.

A purpose of the present invention is to provide a process for recovering the scraps deriving from the machining of aluminum and its alloys, such as trimmings, shavings, filings and the like, however impregnated with oily substances, oils emulsified with water, miscellaneous lubricants and the like, with minimum metal losses and high recovery yields.

Another purpose of the present invention is to provide a process for recovering the scraps, which consists of a small number of simple processing steps, and which allows a directly useable product to be obtained, with a substantial and considerable energy saving as compared with the processes of the known art.

A further purpose is to provide a process which allows the scraps deriving from the machining of aluminum and its alloys to be recovered, with extruded semifinished articles being produced, which are endowed with improved characteristics as regards their ultimate strength.

These and still further purposes, which are evidenced more clearly by the following detailed disclosure, are advantageously achieved by a process for recovering the scraps deriving from the machining of aluminum and its alloys, such as trimmings, shavings, filings, being impregnated with lubricating substances comprising mineral oils, oils emulsified with water, and greases, which process consists, according to the present invention, in reducing the amount of said lubricating substances present in said scraps to a value lower than 0.1% of the total weight of the scraps, as expressed as volatile substances, in grinding, by known means, said scraps until fragments or granules are obtained, which have dimensions comprised within the range of from 0.1 to 8 mm, and in submitting the so-obtained granules to a continuous extrusion process, under high specific pressures, comprised within the range of from $0.5 \cdot 10^6$ kPa to $10^6$ kPa, so as to reach, in the extrusion area, due to the effect of the internal frictions and of compression, a metal temperature comprised within the range of from 300°C to 550°C.

In order to carry out the reduction of the lubricating substances in the scraps, according to the present invention, said scraps are submitted, either in static or in moving furnaces, to a «baking» treatment under an air stream, at a temperature higher than 300°C, i.e., at a temperature at which the fatty and oily substances are destroyed by decomposition or combustion, whilst the emulsifying water and/or other possible solvents are removed by evaporation.

In fact, it has been seen that, by operating by a continuous extrusion, under high specific pressures, comprised within the range of from $0.5 \cdot 10^6$ kPa to $10^6$ kPa, the same extrusion process, as well as the quality of the obtained extruded semifinished articles, both as relates their aesthetical surface effect, and their mechanical characteristics, are not impaired by the metal oxides and by the other possible solid products which are unavoidably formed and which nearly completely cover the particles of the product to be extruded when the scarps impregnated with the emulsified oily substances are baked, due to the high-temperature reaction of the surface of the scraps with air, emulsifying water and moisture, as well as with the lubricating greases and oils and with the products of their thermal and oxidative breakdown.

Always according to the present invention, the baking step may follow, rather than precede, the scraps grinding step used to convert them into granules of the desired dimensions. The grinding step is not carried out, of course, when the dimensions of the scraps are already comprised within the range of from 0.1 to 8 mm.

As already stated, the mechanical characteristics of the extruded semifinished article obtained from scraps according to the present invention, are not impaired by the presence, even in a considerable amount, of aluminum oxides in the granules to be extruded, which oxide, dispersed throughout the metal under the particular conditions under which the extrusion is carried out, in particular, high temperature and high specific pressure conditions in the extrusion area, to the contrary supplies the extruded semifinished article, as relates to its ultimate strength, with improved characteristics. Therefore, the technical and financial advantages are evident of the subject process of the present invention, which allows the scraps deriving from the machining of aluminum and its alloys to be recovered without considerable re-smelting losses, with consequent high energy consumptions, according to the known art, having to be supported; furthermore to the purpose of improving the ultimate strength of the obtained extruded product, advantage being taken of the oxide present on the surface of the metal granules, or produced on it both during the preventive removal step – by the baking of most of initially present lubricating substances – and during the same extrusion step – due to the increase in metal temperature, due to internal friction, when the metal undergoes the continuous extrusion under high specific pressure conditions, according to the present invention.

For the "baking" of the scraps, stationary furnaces or rotary furnaces may be used, and the baking may be indifferently performed either in the absence, or in the presence of air.

Always according to the present invention, the reduction of the lubricating substances present in the scraps can be also carried out by means of a preliminary washing of the scraps by a suitable solvent, followed by the drying of the washed material, so to always bring the total end content of volatile substances in the scraps to be ground and subsequently extruded, to a value lower than 0.1% by weight. As the solvent for the scraps washing, e.g., hydrocarbon-based solvents, chlorinated solvents, and the like, have been advantageously used.

For the extrusion step, machines for continuous extrusion can be used, such as the UKAEA's machines CONFORM (Registered Trademark of UKAEA-Springfields NUCLEAR labs, GB) which are particularly suitable to supply such high specific pressures as required for performing the process according to the present invention, with dies and matrices of tungsten carbide being preferably used.

The operating steps of the subject process of the present invention are better evidenced and detailed by the following examples of practical embodiment, which are supplied to purely indicative purposes, and are not limitative of the protection scope of the same invention.

## Example 1

200 kg of sawing shavings, having the composition: Mg, 0.38%; and Si = 0.45%, containing 0.85% of lubricating emulsion (constituted by 7.5% of mineral oil, the balance being constituted by water plus various emulsifiers and additives) were added to a pit furnace, wherein they were kept at the temperature of 500°C for 4 hours. The shavings removed from the pit furnace showed a residual content of lubricating emulsion, expressed as volatile substances, of 0.08%.

The shavings, after cooling, were ground by using a granulator of known type, equipped with steel blades, of 55 kW of power, so to obtain granules of roughly rectangular shape, with side dimensions of from 2 to 5 mm, and thickness of from 0.1 to 0.3 mm. The bulk specific gravity of the so obtained granules was of 0.85 g/cm$^3$.

Such a granular material was extruded by a CONFORM (Registered Trademark of UKAEA) 260/110 machine for continuous extrusion (wheel of 260 mm of diameter, power 110 kW), equipped with a die suitable to produce a round bar of 9.5 mm of diameter.

The round bar obtained by extrusion was at all satisfactory as for its surface appearance, and mechanical characteristics. These latter resulted to be the following:
– ultimate strength 13.9 kg/mm$^2$, as measured according to ASTM 8557;
– elongation 12.9%, as measured according to ASTM 8557.

## Example 2

40 kg of a mixture consisting of shavings deriving from slabs and ingots, having the composition: Mg, 0.42%; and Si = 0.33%, containing 0.80% of lubricating emulsion (8% of oil, the balance being water with various emulsifiers and additives) were baked inside a pit furnace, for 120 minutes at the temperature of 400°C. They were subsequently ground by using a granulator of the same type as described in Example 1. The content of residual lubricant was 0.075%.

Such a granular material was extruded by a CONFORM® machine for continuous extrusion, equipped with a wheel of 340 mm of diameter, and having a power of 100 kW. A round bar of 6 mm of diameter was obtained, which was at all satisfactory as for its surface appearance, and had the following mechanical characteristics:
– ultimate strength 14.5 kg/mm$^2$, as measured according to ASTM 8557;

– elongation 12.8%, as measured according to ASTM 8557.

### Example 3

100 kg of sawing shavings having the composition: Mg, 0.41%; and Si = 0.43%, were washed by dipping into the solvent SOLVER W/F Registered Trademark of WULKER S.TH.

The so-washed shavings showed a content of 0.075% of residual volatile substances.

The shavings were then ground and extruded, by using the same equipment and by the same modalities as reported in Example 2.

The round rod obtained by extrusion was at all satisfactory as for its surface appearance, and mechanical characteristics.

These latter resulted to be the following:
– ultimate strength 16 kg/mm², as measured according to ASTM 8557;
– elongation 11.7%, it too as measured according to ASTM 8557.

### Claims

1. Process for recovering the scraps deriving from the machining of aluminum and its alloys, comprising trimmings, shavings and filings, said scraps being impregnated with lubricating substances comprising mineral oils, oils emulsified with water, greases and emulsified greases, whereby a reduction of the amount of said lubricating substances present in said scraps to a value lower than 0.1% of the total weight of the scraps, as expressed as volatile substances, is carried out, said scraps are ground, when necessary, until fragments or granules are obtained, which have dimensions comprised within the range of from 0.1 to 8 mm, and then the so-obtained granules are submitted to a continuous extrusion step, under high specific pressures, comprised within the range of from $0.5 \cdot 10^6$ kPa to $10^6$ kPa, so as to reach, in the extrusion area, due to the effect of the internal frictions and of compression, a metal temperature comprised within the range of from 300°C to 550°C, obtaining directly useable extruded semifinished articles.

2. Process according to claim 1, whereby said reduction in the amount of lubricating substances present in the scraps is carried out by baking, under an air stream, said scraps at a temperature higher than 300°C, either in static furnaces, or in moving furnaces.

3. Process according to claim 1, whereby said reduction in lubricating substances is carried out by washing the scraps with solvents comprising hydrocarbons and chlorocarbons.

4. Process according to claim 1, whereby said fragments or granules submitted to the extrusion are nearly completely coated by metal oxides, present and/or formed during said scraps baking step for the removal of said lubricating substances.

### Patentansprüche

1. Verfahren zur Rückgewinnung von Abfällen, die bei der Bearbeitung von Aluminium und seinen Legierungen entstehen, enthaltend Abfälle vom Beschneiden, Späne und Feilspäne, wobei die genannten Abfälle mit Schmierstoffen, enthaltend Mineralöle, mit Wasser emulgierte Öle, Schmierfette und emulgierte Schmierfette, getränkt sind und eine Verminderung der Menge der in den Abfällen vorhandenen Schmierstoffe auf einen Wert von weniger als 0,1% des Gesamtgewichts der Abfälle, ausgedrückt in flüchtigen Substanzen, durchgeführt wird, wobei diese Abfälle gemahlen werden, wenn nötig, bis Bruchstücke oder Körnchen erhalten werden, die Abmessungen aufweisen, die in einem Bereich von 0,1 bis 8 mm liegen, und anschließend die so erhaltenen Körnchen unter hohen spezifischen Drucken, die in einem Bereich von $0,5 \cdot 10^6$ kPa bis $10^6$ kPa liegen, einer kontinuierlichen Extrusionsstufe unterworfen werden, um im Extrusionsbereich durch den Effekt von inneren Reibungen und der Komprimierung eine Metalltemperatur, die im Bereich von 300°C bis 550°C liegt, zu erreichen, wodurch man unmittelbar verwendbare extrudierte Halbfabrikate erhält.

2. Verfahren nach Anspruch 1, wobei die genannte Verminderung der Menge der Schmierstoffe, die in den Abfällen vorhanden sind, durch Erhitzen der Abfälle unter einem Luftstrom bei einer Temperatur, die höher als 300°C ist, entweder in einem statischen oder in einem sich bewegenden Ofen, durchgeführt wird.

3. Verfahren nach Anspruch 1, wobei die genannte Verminderung der Schmierstoffe durch Waschen der Abfälle mit Lösungsmitteln, die Kohlenwasserstoffe und Chlorkohlenstoffe enthalten, durchgeführt wird.

4. Verfahren nach Anspruch 1, wobei die genannten Bruchstücke oder Körnchen, die der Extrusion unterworfen werden, fast vollständig mit Metalloxiden überzogen sind, die vorhanden sind und/oder während der Stufe des Erhitzens der Abfälle zur Entfernung der Schmierstoffe gebildet wurden.

### Revendications

1. Procédé de récupération des déchets produits au cours de l'usinage de l'aluminium et de ses alliages, comprenant des déchets d'ébarbages, de rasages et de limages, lesdits déchets étant imprégnés de substances lubrifiantes comprenant des huiles minérales, des huiles émulsifiées à l'eau, des graisses et des graisses émulsifiées, dans lequel on réalise une réduction de la quantité desdites substances lubrifiantes présentes dans lesdits déchets à une valeur inférieure à 0,1% du poids total des déchets, exprimé en substances volatiles, lesdits déchets étant moulus, si nécessaire, jusqu'à ce que l'on obtienne des fragments ou des granules qui présentent des dimensions comprises entre 0,1 et 8 mm, et les granules ainsi obtenues étant soumises à une étape d'extrusion en continu, sous des pressions spécifiques élevées comprises entre $0,5 \times 10^6$ kPa et $10^6$ kPa de façon à atteindre dans la zone d'extrusion, par l'effet des frictions internes et de la compression, une température de métal comprise entre 300°C et 550°C, et à obtenir des articles extrudés semi-finis directement utilisables.

2. Procédé selon la revendication 1, dans lequel ladite réduction de la quantité de substances lubrifiantes présentes dans les déchets est réalisée par séchage au four dans un courant d'air, lesdits déchets étant portés à une température supérieure à 300°C, dans des fours fixes ou mobiles.

3. Procédé selon la revendication 1, dans lequel ladite réduction des substances lubrifiantes est réalisée par lavage des déchets avec des solvants comprenant des hydrocarbures et des chlorocarbures.

4. Procédé selon la revendication 1, dans lequel lesdits fragments ou granules soumis à l'extrusion sont presque complètement enrobés d'oxyde métallique, présents et/ou formés au cours de ladite étape de séchage au four des déchets pour extraire lesdites substances lubrifiantes.